# EUROPEAN PATENT APPLICATION

(11) **EP 2 829 554 A1**
(43) Date of publication of application: **28.01.2015**
(21) Application number: 13764537.0
(22) Date of filing: 15.02.2013
(51) Int. Cl.: C08F 2/44, C08F 4/646, C08F 10/00, C08K 5/13, C08K 5/524, C08L 23/00

(54) **METHOD FOR PRODUCING OLEFIN RESIN COMPOSITION FOR ELECTRIC APPLIANCE MATERIALS AND AUTOMOTIVE INTERIOR MATERIALS**

(30) Priority: 23.03.2012 JP 2012067832
(71) Applicant: Adeka Corporation, Tokyo 116-0012 (JP)
(72) Inventor: KAWAMOTO Naoshi, Saitama-shi Saitama 336-0022 (JP); URUSHIHARA Tsuyoshi, Saitama-shi Saitama 336-0022 (JP); OKAMOTO Kohei, Saitama-shi Saitama 336-0022 (JP); SEGUCHI Tetsuya, Saitama-shi Saitama 336-0022 (JP)
(74) Representative: Jones, Helen M.M.
(86) International application number: PCT/JP2013/053748
(87) International publication number: WO 2013/140905

(57) **Abstract**

The present invention provides a method capable of producing an olefin resin composition for a home electric appliance materials and automotive interior materials that has good color tone and shows excellent fogging resistance, in which method the total amount of stabilizer(s) to be added is reduced and cost reduction can thus be attained. The method of producing an olefin resin composition for an automotive interior material by polymerization of an olefin monomer according to the present invention is characterized by comprising the step of adding, before or during the polymerization of an olefin monomer, 0.001 to 0.5 parts by mass of a phenolic antioxidant, which is represented by the following Formula (1) and masked with an organoaluminum compound, with respect to 100 parts by mass of an olefin resin obtained by the polymerization: 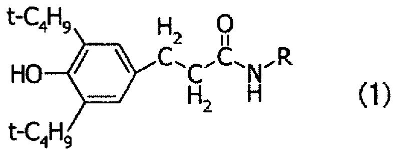 (wherein, R represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

## Description

### TECHNICAL FIELD

The present invention relates to a method of producing an olefin resin composition for home electric appliance materials and automotive interior materials. More particularly, the present invention relates to a method of producing an olefin resin composition for home electric appliance materials and automotive interior materials, by which an olefin resin composition that exhibits good color tone and fogging resistance and is suitable as a home electric appliance material or automotive interior material can be produced.

Olefin resins have poor stability against heat and light and are thus easily oxidized/degraded when molded at a high temperature or exposed to strong light, so that the service life required as a plastic product cannot be attained. In order to prevent such oxidation/degradation, a stabilizer such as a phenolic antioxidant, a phosphorus-based antioxidant, a sulfur-based antioxidant, a hydroxylamine compound, a hindered amine compound, an ultraviolet absorber or an acid scavenger is commonly added.

Examples of a method of adding a stabilizer to an olefin resin include a method in which an olefin resin obtained by polymerization of an olefin monomer is mixed with a stabilizer and the resulting mixture is then melt-kneaded using a mold-processing equipment such as an extruder so as to disperse the stabilizer in the olefin resin; and a method in which a stabilized olefin resin is obtained by polymerizing an olefin monomer with an addition of a stabilizer before or during the polymerization.

However, such a method of blending an olefin resin and a stabilizer by melt-kneading is economically disadvantageous because the stabilizer must be added in an amount that is more than necessary in order to mitigate the problem of defective dispersion of the stabilizer. Meanwhile, a method in which a stabilizer is added before or during polymerization of an olefin monomer also has a problem in that the stabilizer may inhibit the polymerization in some cases.

Further, in order to attain long-term stabilization of an olefin resin, it is thought to increase the amount of an antioxidant to be added; however, an addition of a stabilizer in a large amount not only is economically disadvantageous but also presents problems of, for example, coloration of the resulting molded article due to the color of the stabilizer itself.

Olefin resins are also applied to the exteriors of home electric appliances and the interior components of automobiles; however, these articles are characterized in that they are constantly exposed to the consumer eyes in daily life and subjects of increasing demands for functionality as well as design in recent years. Therefore, in an olefin resin to be used in a home electric appliance material or automotive interior, a great importance is given particularly to having good outer appearance, and the olefin resin is required to be excellent not only in general properties such as heat resistance and light resistance but also in coloration resistance and fogging resistance.

For example, in automotive interior materials, since they are exposed to intense sunlight under high-temperature conditions in outdoor parking and the like, high-level light resistance, weathering resistance and coloration resistance are required. Further, the term "fogging" refers to a phenomenon that, for example, an additive contained in an automotive interior material is vaporized inside the car at a high temperature and condensed on the interior surface of window glass cooled by the outside air, thereby clouding the window glass and deteriorating the visibility. Since fogging not only impairs the outer appearance but also blocks the view, it potentially compromises the safety.

Thus far, a variety of methods have been proposed for obtaining a home electric appliance material or automotive interior material that exhibits excellent resistance against heat, weathering and fogging.

For example, in Patent Document 1, it is disclosed to add respective (C) resin additives satisfying specific conditions in an amount of 0.05 to 0.6 parts by weight and 0.05 to 0.4 parts by weight with respect to a total of 100 parts by weight of (A) an olefin resin and (B) an ethylene-α-olefin-based copolymer rubber. As resin additives corresponding to the above-described (C), phenolic antioxidants and phosphorus-based antioxidants that have a molecular weight of 200 to 1,500, hindered amine-based and hydroxybenzotriazole-based light stabilizers having a molecular weight of 200 to 1,000, fatty acid amides having 10 to 25 carbon atoms and bis-fatty acid amide-based lubricants are disclosed.

In Patent Document 2, it is shown that, by performing polymerization of propylene using a metallocene catalyst as a polymerization catalyst, production of low-molecular-weight components as by-products is inhibited, so that a propylene-based polymer having a narrow molecular weight distribution can be produced and a resin composition having excellent fogging resistance can be thereby obtained.

### RELATED ART DOCUMENTS

### PATENT DOCUMENTS

Patent Document 1: Japanese Unexamined Patent Application Publication No. H10-36578
Patent Document 2: Japanese Unexamined Patent Application Publication No. 2006-188625

### SUMMARY OF THE INVENTION

### PROBLEMS TO BE SOLVED BY THE INVENTION

However, in the above-described method of Patent Document 1, the fogging resistance of the resulting resin composition is still not satisfactory; therefore, a further improvement is demanded. Further, in the resin composition according to Patent Document 2, the narrow molecular weight distribution causes problems of, for example, a reduction in the processability and frequent occurrence of molding irregularities in the resulting complex-shaped molded article.

In view of the above, an object of the present invention is to provide a method capable of producing an olefin resin composition for home electric appliance materials and automotive interior materials that has good color tone and shows excellent fogging resistance, in which method the total amount of stabilizer(s) to be added is reduced and cost reduction can thus be attained.

### MEANS FOR SOLVING THE PROBLEMS

The present inventors intensively studied to discover that the above-described problems can be solved by adding a specific phenolic antioxidant masked with an organoaluminum compound at the time of polymerizing an olefin monomer, thereby completing the present invention.

Thus far, in Japanese Unexamined Patent Application Publication Nos. 2005-206625, 2005-255953, 2006-282985 and the like, the present inventors have proposed methods of stabilizing a polymer without reducing the activity of a polymerization catalyst by performing a masking treatment where an organoaluminum compound normally used in olefin polymerization is mixed with a phenolic antioxidant in an existing catalyst feed tank or polymerization vessel; however, such an effect of improving the fogging resistance is mentioned at all in these documents.

That is, the method of producing an olefin resin composition for an automotive interior material according to the present invention is a method of producing an olefin resin composition for an automotive interior material by polymerization of an olefin monomer, the method being characterized by comprising the step of adding, before or during the polymerization of an olefin monomer, 0.001 to 0.5 parts by mass of a phenolic antioxidant, which is represented by the following Formula (1) and masked with an organoaluminum compound, with respect to 100 parts by mass of an olefin resin obtained by the polymerization: 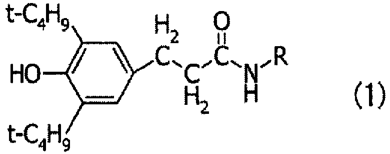 (wherein, R represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

Further, the method of producing an olefin resin composition for a home electric appliance material according to the present invention is a method of producing an olefin resin composition for a home electric appliance material by polymerization of an olefin monomer, the method being characterized by comprising the step of adding, before or during the polymerization of an olefin monomer, 0.001 to 0.5 parts by mass of a phenolic antioxidant, which is represented by the following Formula (1) and masked with an organoaluminum compound, with respect to 100 parts by mass of an olefin resin obtained by the polymerization: 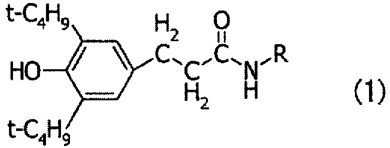 (wherein, R represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

In the method of producing an olefin resin composition for an automotive interior material according to the present invention, it is preferred that the above-described organoaluminum compound be a trialkylaluminum.

In the method of producing an olefin resin composition for a home electric appliance material according to the present invention, it is preferred that the above-described organoaluminum compound be a trialkylaluminum.

In the method of producing an olefin resin composition for an automotive interior material according to the present invention, it is preferred that a phosphorus-based antioxidant be further added before or during polymerization of a monomer comprising an ethylenically unsaturated bond.

In the method of producing an olefin resin composition for a home electric appliance material according to the present invention, it is preferred that a phosphorus-based antioxidant be further added before or during polymerization of a monomer comprising an ethylenically unsaturated bond.

The automotive interior material according to the present invention is characterized by being obtained by molding an olefin resin composition for an automotive interior material produced by the above-described method of producing an olefin resin composition for an automotive interior material.

The home electric appliance exterior material according to the present invention is characterized by being obtained by molding an olefin resin composition for a home electric appliance material produced by the above-described method of producing an olefin resin composition for a home electric appliance material.

### EFFECTS OF THE INVENTION

By the present invention, a method capable of producing an olefin resin composition for home electric appliance materials and automotive interior materials that has good color tone and shows excellent fogging resistance, in which method the total amount of stabilizer(s) to be added is reduced and cost reduction can thus be attained, can be provided. Preferably, in the fogging resistance test according to ISO 6452, the olefin resin composition for a home electric appliance material or automotive interior material that is obtained by the production method of the present invention does not show any fogging characteristic.

### MODE FOR CARRYING OUT THE INVENTION

The method of producing an olefin resin composition for an automotive interior material and the method of producing an olefin resin composition for a home electric appliance material according to the present invention are both characterized by comprising adding, before or during polymerization of an olefin monomer, 0.001 to 0.5 parts by mass of a phenolic antioxidant, which is represented by the following Formula (1) and masked with organoaluminum, with respect to 100 parts by mass of a polymer obtained by the polymerization: 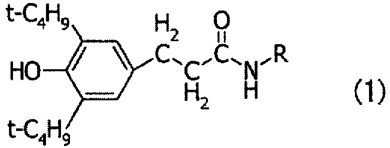 (wherein, R represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

Examples of the alkyl group having 1 to 30 carbon atoms which is optionally branched and represented by R in the above-described Formula (1) include a methyl group, an ethyl group, a propyl group, an isopropyl group, a butyl group, a sec-butyl group, a t-butyl group, an isobutyl group, a pentyl group, an isopentyl group, a t-pentyl group, a hexyl group, a heptyl group, an n-octyl group, an isooctyl group, a t-octyl group, a nonyl group, an isononyl group, a decyl group, an undecyl group, a dodecyl group, a tridecyl group, a tetradecyl group, a pentadecyl group, a hexadecyl group, a heptadecyl group and an octadecyl group; however, in the present invention, an alkyl group having 12 to 24 carbon atoms is particularly preferred. When the alkyl group has less than 12 carbon atoms, the phenolic antioxidant may be easily vaporized, while when the alkyl group has more than 24 carbon atoms, the ratio of phenol relative to the molecular weight of the phenolic antioxidant is decreased, so that the stabilizing effect may be reduced.

The above-described alkyl groups are also optionally interrupted by an oxygen atom, a sulfur atom or the below-described aryl group, and the hydrogen atoms of the alkyl group are also optionally substituted with a hydroxy group, a cyano group, an alkenyl group, a chain aliphatic group such as an alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline, or a cyclic aliphatic group such as a cycloalkyl group. In addition, these interruptions or substitutions may also exist in combination.

Examples of the cycloalkyl group having 3 to 12 carbon atoms which is optionally substituted and represented by R in the above-described Formula (1) include a cyclopropyl group, a cyclopentyl group, a cyclohexyl group, a cycloheptyl group, a cyclooctyl group, a cyclononyl group and a cyclodecyl group. The hydrogen atoms of the cycloalkyl group are optionally substituted with an alkyl group, an alkenyl group, an alkenyloxy group, a hydroxy group or a cyano group, and the alkyl group is also optionally interrupted by an oxygen atom or a sulfur atom.

Examples of the aryl group having 6 to 18 carbon atoms which is optionally substituted and represented by R in the above-described Formula (1) include a phenyl group, a methylphenyl group, a butylphenyl group, an octylphenyl group, a 4-hydroxyphenyl group, a 3,4,5-trimethoxyphenyl group, a 4-t-butylphenyl group, a biphenyl group, a naphthyl group, a methylnaphthyl group, an anthracenyl group, a phenanthryl group, a benzyl group, a phenylethyl group and a 1-phenyl-1-methylethyl group. Further, the hydrogen atoms of the aryl group are optionally substituted with an alkyl group, an alkenyl group, an alkenyloxy group, a hydroxy group or a cyano group, and the alkyl group is also optionally interrupted by an oxygen atom or a sulfur atom.

Specific examples of the structure of the phenolic antioxidant represented by the Formula (1) include the following compounds No. 1 to No. 16. However, the present invention is not restricted to the following compounds by any means.

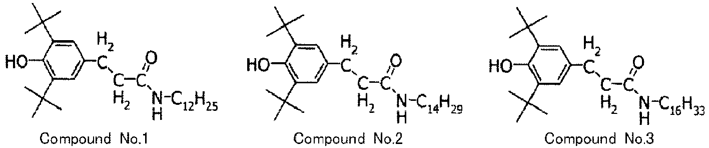

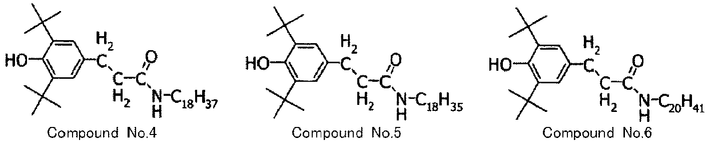

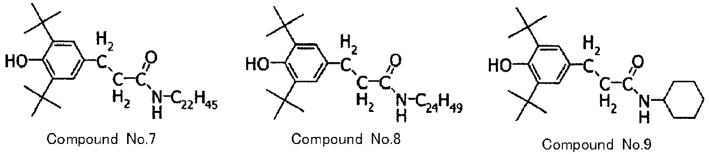

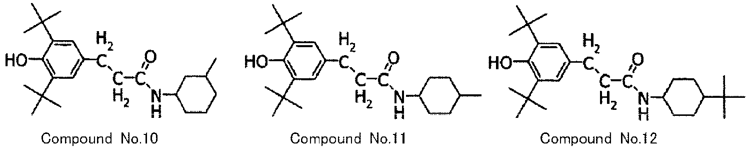

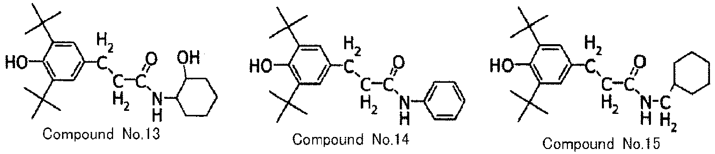

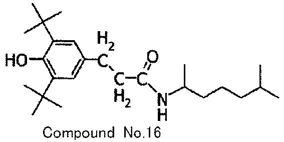

The above-described phenolic antioxidant is added in an amount of 0.001 to 0.5 parts by mass, preferably 0.001 to 0.3 parts by mass, with respect to 100 parts by mass of a polymer obtained by the polymerization (hereinafter, may be simply referred to as "the polymer").

In the present invention, an amide compound of 3-(3,5-dialkyl-4-hydroxyphenyl)propionic acid which is represented by the Formula (1), such as stearyl-3-(3,5-di-tert-butyl-4-hydroxyphenyl)propionic acid amide, palmityl-3-(3,5-di-tert-butyl-4-hydroxyphenyl)propionic acid amide, myristyl-3-(3,5-di-tert-butyl-4-hydroxyphenyl)propionic acid amide or lauryl-3-(3,5-di-tert-butyl-4-hydroxyphenyl)propionic acid amide, is particularly preferred because it provides excellent stabilization effect and allows the resulting olefin resin composition to have excellent color tone.

In the present invention, by mixing an organoaluminum compound with the phenolic antioxidant, the hydrogen of the phenolic hydroxyl group of the phenolic antioxidant can be easily substituted with the organoaluminum compound, so that the phenolic antioxidant can be masked with organoaluminum. As the organoaluminum compound, such an organoaluminum compound that allows a phenolic antioxidant masked with a hydrogen-donating compound, such as water, an alcohol or an acid, to be regenerated to phenol by a treatment is employed.

As the above-described organoaluminum compound, for example, an alkylaluminum or alkylaluminum hydride can be used; however, an alkylaluminum is preferred. The organoaluminum compound is particularly preferably a trialkylaluminum and specific examples thereof include trimethylaluminum, triethylaluminum, tri-n-propylaluminum, triisobutylaluminum, tri-n-hexylaluminum and tri-n-octylaluminum. All of the above-described organoaluminum compounds may be used in the form of a mixture. In addition, aluminoxane obtained by reaction between an alkylaluminum or alkylaluminum hydride and water can also be used in the same manner.

In the production method of the present invention, the above-described masked phenolic antioxidant is added before or during the polymerization of an olefin monomer and this addition is performed in, for example, a polymerization system, a catalyst system or a piping.

As a method for the above-described masking, the organoaluminum compound and the phenolic antioxidant can be simply mixed with stirring in an inert solvent. When the compound produced as a by-product in the reaction of this method does not affect the resulting polymer, the thus masked phenolic antioxidant may be used as is; however, when the by-product compound inhibits polymerization, it is preferred to remove the compound by vacuum distillation or the like before using the masked phenolic antioxidant.

It is preferred that the mixing ratio of the organoaluminum compound and the phenolic antioxidant represented by the above-described Formula (1) be, in terms of mass ratio, 1/5 to 100/1. When the ratio is lower than 1/5, there is a problem that the excessive amount of the phenolic antioxidant may adversely affect the catalyst activity, while when the ratio is higher than 100/1, an aluminum compound remains in the resulting polymer after the polymerization and this may cause deterioration in the physical properties of the polymer or affect the component ratio of the catalyst metal, making it unable to perform the desired polymerization.

Examples of the above-described inert solvent include aliphatic and aromatic hydrocarbon compounds. Examples of the aliphatic hydrocarbon compounds include saturated hydrocarbon compounds such as n-pentane, n-hexane, n-heptane, n-octane, isooctane and refined kerosene; and cyclic saturated hydrocarbon compounds such as cyclopentane, cyclohexane and cycloheptane. Examples of the aromatic hydrocarbon compounds include benzene, toluene, ethylbenzene and xylene. Among these compounds, n-hexane or n-heptane is preferably used. The concentration of a trialkylaluminum salt in the inert solvent is in the range of preferably 0.001 to 0.5 mol/L, particularly preferably 0.01 to 0.1 mol/L.

In the method of producing an olefin resin composition for an automotive interior material and the method of producing an olefin resin composition for a home electric appliance according to the present invention, it is preferred that a phosphorus-based antioxidant be further added before or during polymerization of a monomer comprising an ethylenically unsaturated bond.

Examples of the above-described phosphorus-based antioxidant include triphenyl phosphite, trisnonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene-bis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-di-tert-butylphenyl)-2-ethylhexyl phosphite, 2,2'-methylenebis(4,6-di-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and phosphites of 2-ethyl-2-butylpropylene glycol and 2,4,6-tri-tert-butylphenol. Thereamong, a phosphorus-based antioxidant which does not adversely affect the polymerization even when it is added therebefore, such as tris(2,4-di-tert-butylphenyl)phosphite, is preferred. The above-described phosphorus-based antioxidant is used in an amount of 0.001 to 1 part by mass, preferably 0.001 to 0.5 parts by mass, with respect to 100 parts by mass of a polymer obtained by the polymerization.

In cases where the above-described phosphorus-based antioxidant is added before or during polymerization of an ethylenically unsaturated monomer, the phosphorus-based antioxidant is mixed with the above-described inert solvent. The phosphorus-based antioxidant may be mixed with the inert solvent together with the above-described phenolic antioxidant represented by the Formula (1) in advance, or the phosphorus-based antioxidant may be mixed with the inert solvent separately from the phenolic antioxidant represented by the Formula (1) and then added to the polymerization system, catalyst system or piping.

Examples of the above-described monomer comprising an ethylenically unsaturated bond include ethylene, propylene, 1-butene, 1-hexene, 3-ethyl-1-butene, 3-methyl-1-pentene, 4-methyl-1-pentene, vinylcycloalkane, styrene and derivatives of these monomers. Preferably one of the above-described monomers comprising an ethylenically unsaturated bond is used individually.

The polymerization of the ethylenically unsaturated monomer is required to be performed in the presence of a polymerization catalyst in an inert gas atmosphere such as nitrogen; however, it may also be performed in the above-described inert solvent. Further, an active hydrogen compound, a particulate carrier, an organoaluminum compound, an ion-exchanging layered compound and/or an inorganic silicate may also be added in an amount that does not inhibit the polymerization.

The above-described polymerization catalyst is not particularly restricted and any known polymerization catalyst can be employed. Examples thereof include compounds of transition metals belonging to any of the groups 3 to 11 of the periodic table (such as titanium, zirconium, hafnium, vanadium, iron, nickel, lead, platinum, yttrium and samarium), and representative examples of the polymerization catalyst include Ziegler catalysts; Ziegler-Natta catalysts composed of a titanium-containing solid transition metal component and an organic metal component; and metallocene catalysts composed of a transition metal compound belonging to any one of the groups 4 to 6 of the periodic table, which has at least one cyclopentadienyl skeleton, and a co-catalyst component; however, an electron-donating compound is preferably employed since a high-quality polymer can be thereby obtained.

Examples of the above-described Ziegler catalysts include those catalysts that are produced by subjecting titanium trichloride or a titanium trichloride composition, which is obtained by reduction of titanium tetrachloride with organoaluminum or the like, to a treatment with an electron-donating compound and then activating the resultant (see, for example, Japanese Unexamined Patent Application Publication Nos. S47-34478, S58-23806 and S63-146906); catalysts composed of a titanium trichloride composition, which is obtained by reducing titanium tetrachloride with an organoaluminum compound and then treating the resultant with a variety of electron donors and electron acceptors, an organoaluminum compound and an aromatic carboxylic acid ester (see, for example, Japanese Unexamined Patent Application Publication Nos. S56-100806, S56-120712 and S58-104907); and supported-type catalysts composed of titanium tetrachloride and a variety of electron donors that are supported on magnesium halide (see, for example, Japanese Unexamined Patent Application Publication Nos. S57-63310, S58-157808, S58-83006, S58-5310, S61-218606, S63-43915 and S63-83116).

Examples of the above-describe metallocene catalysts include the transition metal metallocene catalyst described in Japanese Unexamined Patent Application Publication No. H9-12621; and those transition metal metallocene catalysts that are primarily used for polymerization of polypropylene, which are described in Japanese Unexamined Patent Application Publication Nos. H5-043616, H5-295022, H5-301917, H6-239914, H6-239915, H6-239917, H7-082311, H7-228621, H7-330820, H8-059724, H8-085707, H8-085708, H8-127613, H10-226712, H10-259143, H10-265490, H11-246582, H11-279189, H11-349633, 2000-229990, 2001-206914, 2002-37795, 2002-194015 and 2002-194016, Japanese Translated PCT Patent Application Laid-open No. 2002-535339, WO 99/37654, WO 99/45014 and WO 00/8036.

Examples of the above-described electron-donating compound include ether-based compounds, ester-based compounds, ketone-based compounds and alkoxysilane-based compounds. These electron-donating compounds may be added individually, or a plurality thereof may be added as required.

Examples of the above-described ether-based compounds include diethyl ether, dipropyl ether, diisopropyl ether, di-n-butyl ether, diethylene glycol dimethyl ether, propylene glycol dimethyl ether, ethylene oxide, tetrahydrofuran, 2,2,5,5-tetramethyl tetrahydrofuran and dioxane.

Examples of the above-described ester-based compounds include methyl acetate, ethyl acetate, n-propyl acetate, isopropyl acetate, methyl propionate, ethyl propionate, n-propyl propionate, methyl methacrylate, ethyl methacrylate, n-propyl methacrylate, ethyl phenylacetate, methyl benzoate, ethyl benzoate, phenyl benzoate, methyl toluate, ethyl toluate, methyl anisate, ethyl anisate, methyl methoxybenzoate, ethyl methoxybenzoate, methyl methacrylate, ethyl methacrylate, dimethyl phthalate, diethyl phthalate, dipropyl phthalate, dibutyl phthalate, diisobutyl phthalate, dihexyl phthalate, γ-butyrolactone and ethyl cellosolve.

Examples of the above-described ketone-based compounds include acetone, diethyl ketone, methyl ethyl ketone and acetophenone.

Examples of the above-described alkoxysilane-based compounds include tetramethoxysilane, ethyltrimethoxysilane, propyltrimethoxysilane, isopropyltrimethoxysilane, t-butyltrimethoxysilane, i-butyltrimethoxysilane, phenyltrimethoxysilane, cyclohexyltrimethoxysilane, diethyldimethoxysilane, dipropyldimethoxysilane, diisopropyldimethoxysilane, diphenyldimethoxysilane, t-butylmethyldimethoxysilane, t-butylethyldimethoxysilane, t-butyl-n-propyldimethoxysilane, t-butylisopropyldimethoxysilane, cyclohexylmethyldimethoxysilane, tetraethoxysilane, ethyltriethoxysilane, propyltriethoxysilane, isopropyltriethoxysilane, t-butyltriethoxysilane, phenyltriethoxysilane, cyclohexyltriethoxysilane, diethyldiethoxysilane, dipropyldiethoxysilane, diisopropyldiethoxysilane, diphenyldiethoxysilane, t-butylmethyldiethoxysilane and cyclohexylmethyldiethoxysilane.

The type of the above-described carrier is not restricted and examples thereof include inorganic carriers such as inorganic oxides and organic carriers such as porous polyolefins. A plurality of these carriers may also be used in combination.

Examples of the above-described inorganic carriers include silica, alumina, magnesium oxide, zirconium oxide, titanium oxide, iron oxide, calcium oxide and zinc oxide. In addition, examples of other inorganic carriers include magnesium halides such as magnesium chloride and magnesium bromide; magnesium alkoxides such as magnesium ethoxide; and ion-exchanging layered compounds.

The above-described "ion-exchanging layered compound" refers to a compound having a crystalline structure in which the surfaces constituted by ionic bonds and the like are laminated in parallel with each other through weak bonding force and contain exchangeable ions. Specific examples of such ion-exchanging layered compound include kaolin, bentonite, talc, kaolinite, vermiculite, montmorillonite, mica, α-Zr(HAsO₄)₂·H₂O, α-Zr(HPO₄)₂·H₂O, α-Sn(HPO₄)₂·H₂O and γ-Ti(NH₄PO₄)₂·H₂O.

Examples of the above-described organic carriers include polyesters such as polyethylenes, polypropylenes, polystyrenes, ethylene-butene copolymers, ethylenepropylene copolymers, polymethacrylates, polyacrylates, polyacrylonitriles, polyamides, polycarbonates and polyethylene terephthalates; and polyvinyl chlorides. These organic carriers may also be cross-linked as in the case of, for example, a styrene-divinylbenzene copolymer. Further, these organic carriers on which catalysts are chemically bound can be used as well.

These carriers have a particle size (volume-average) in the range of usually 0.1 to 300 µm, preferably 1 to 200 µm, more preferably 10 to 100 µm. When the particle size is smaller than 1 µm, the resulting polymer is likely to be in the form of fine powder, while when the particle size is excessively large, coarse particles are generated. Therefore, the particle size of the carrier should be selected in accordance with the desired particle shape.

The above-described carriers usually have a pore volume of 0.1 to 5 cm²/g, preferably 0.3 to 3 cm²/g. The pore volume can be measured by, for example, a BET method or mercury porosimetry.

As a method of performing the polymerization reaction, any method that is conventionally used can be employed. For example, a method of performing polymerization in a liquid phase in the presence of an inert solvent such as an aliphatic hydrocarbon (e.g., butane, pentane, hexane, heptane or isooctane), an alicyclic hydrocarbon (e.g., cyclopentane, cyclohexane or methylcyclohexane), an aromatic hydrocarbon (e.g., toluene, xylene or ethylbenzene), a gasoline fraction or a hydrogenated diesel fraction; a polymerization method in which a liquefied monomer itself is used as a medium; a method of performing polymerization in a gas phase where substantially no liquid phase is present, such as an inert gas atmosphere of nitrogen or the like; or a combination of two or more of these polymerization methods can also be employed. Further, the polymerization may be performed by either a batchwise process or continuous process, or it may also be performed by a single-step polymerization method or multi-step polymerization method.

As a polymerization vessel to be used in the above-described polymerization reaction, a continuous reaction vessel installed in an existing polymerization equipment can be used as is. In the present invention, there is no particular restriction on the size, shape, material and the like of the existing polymerization equipment.

In the above-described polymer, as required, other conventional additive(s) may be incorporated as well. As a method of incorporating other additive(s), any additive may be added at the time of polymerizing an olefin monomer as long as the additive does not inhibit the polymerization. Alternatively, the addition may be carried out by a method in which, after polymerization of an olefin monomer, other additive(s) in an amount appropriate for the intended purpose thereof is/are mixed with the resulting olefin resin and the resulting mixture is then melt-kneaded to be granulated and molded using a molding machine such as an extruder.

Examples of the above-described other additives include a phenolic antioxidant, a phosphorus-based antioxidant, a thioether-based antioxidant, an ultraviolet absorber, a heavy metal inactivator, a nucleating agent, a flame retardant, a metallic soap, a hydrotalcite, a filler, a lubricant, an antistatic agent, a pigment, a dye and a plasticizer.

Examples of the above-described phenolic antioxidant include 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphonate, tridecyl-3,5-di-t-butyl-4-hydroxybenzyl thioacetate, thiodiethylene-bis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid]glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-dit-butyl-4-hydroxyphenyl)propionyloxyethyl]isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8,10-tetraoxaspiro[5.5]undecane, triethylene glycol-bis[β-(3-t-butyl-4-hydroxy-5-methylphenyl)propionate] and phenolic antioxidants represented by the above-described Formula (1). Thereamong, tetrakis[methylene-3-(3',5'-di-t-butyl-4'-hydroxyphenyl)propionate]methane is preferably used since it is relatively inexpensive and has good cost performance.

Examples of the above-described phosphorus-based antioxidant include the same ones as those exemplified in the above.

Examples of the thioether-based antioxidant include tetrakis[methylene-3-(laurylthio)propionate]methane, bis(methyl-4-[3-n-alkyl(C12/C14)thiopropionyloxy]5-t-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol) and distearyl disulfide.

The thioether-based antioxidant is used in an amount of preferably 0.001 to 0.3 parts by mass, more preferably 0.01 to 0.3 parts by mass, with respect to 100 parts by mass of the above-described polymer.

Examples of the above-described ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to C13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and a variety of metal salts and metal chelates, particularly salts and chelates of nickel and chromium.

The above-described ultraviolet absorber is used in an amount of preferably 0.001 to 5 parts by mass, more preferably 0.005 to 0.5 parts by mass, with respect to 100 parts by mass of the above-described polymer.

Examples of the above-described hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethylsuccinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11 -tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bins{4-(1-octyloxy-2,2,6,6-tetramethyl)piperidyl}decanedionate, bis{4-(2,2,6,6-tetramethyl-1-undecyloxy)piperidyl}carbonate, and TINUVIN NOR 371 manufactured by BASF Japan Ltd.

The above-described hindered amine-based light stabilizer is used in an amount of 0.001 to 5 parts by mass, more preferably 0.005 to 0.5 parts by mass, with respect to 100 parts by mass of the above-described polymer.

Examples of the above-described nucleating agent include metal carboxylates such as sodium benzoate, aluminum 4-tert-butylbenzoate, sodium adipate and 2-sodium-bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyhydric alcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxamide (RIKACLEAR PC1), N,N',N"-tricyclohexyl-1,3,5-benzene tricarboxamide, N,N'-dicyclohexyl-naphthalene dicarboxamide and 1,3,5-tri(dimethylisopropoylamino)benzene.

The above-described nucleating agent is used in an amount of preferably 0.001 to 10 parts by mass, more preferably 0.005 to 5 parts by mass, with respect to 100 parts by mass of the above-described polymer.

Examples of the above-described flame retardant include aromatic phosphates such as triphenyl phosphate, tricresyl phosphate, trixylenyl phosphate, cresyldiphenyl phosphate, cresyl-2,6-xylenyl phosphate and resorcinol bis(diphenylphosphate); phosphonates such as divinyl phenylphosphonate, diallyl phenylphosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate and brominated styrene.

The above-described flame retardant is used in an amount of preferably 1 to 70 parts by mass, more preferably 10 to 30 parts by mass, with respect to 100 parts by mass of the above-described polymer.

Preferred examples of the above-described filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite and fibrous magnesium oxysulfate. Thereamong, fillers having an average particle size (in the case of spherical and plate-form fillers) or an average fiber diameter (in the case of needle-form and fibrous fillers) of 5 µm or less are preferred. The amount of the above-described filler to be used can be set as appropriate in a range where the present invention is not adversely affected.

The above-described lubricant is added for the purposes of imparting the surface of the resulting molded article with lubricity and improving the damage-preventing effect. Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described lubricant is added in an amount of 0.03 to 2 parts by mass, more preferably 0.04 to 1 part by mass, with respect to 100 parts by mass of the above-described polymer. When the amount is less than 0.03 parts by mass, the desired lubricity may not be attained, while when the amount is greater than 2 parts by mass, the lubricant component may bleed out to the surface of the resulting molded article of the polymer and/or cause deterioration in the physical properties thereof.

The above-described antistatic agent is added for the purposes of reducing the electrostatic property of the resulting molded article and preventing adhesion of dusts caused by electrostatic charge. Examples of such antistatic agent include cationic, anionic and non-ionic antistatic agents as well as other various antistatic agents. Preferred examples thereof include polyoxyethylene alkylamines, polyoxyethylene alkylamides, fatty acid esters thereof and glycerin fatty acid esters. These antistatic agents may be used individually, or two or more thereof may be used in combination. Further, the antistatic agent(s) is/are added in an amount of preferably 0.03 to 2 parts by mass, more preferably 0.04 to 1 part by mass, with respect to 100 parts by mass of the above-described polymer. When the amount of the antistatic agent(s) is excessively small, the antistatic effect is insufficient, while when the amount is excessively large, the antistatic agent(s) may bleed out to the surface and/or cause deterioration in the physical properties of the polymer.

The olefin resin composition for an automotive interior material obtained by the method of producing an olefin resin composition for an automotive interior material according to the present invention is suitable as a plastic material used in automotive interiors. Examples of the automotive interiors include air-bag covers, door modules, steering wheels, console boxes, glove boxes, heater casings, interior lamp housings, rearview mirrors, assist grips, grips of various levers, and cockpit modules in which interior panels, steering members, air-conditioning system, air-bag systems, various displays, switches, audio systems and the like are integrated.

Further, the olefin resin composition for a home electric appliance material obtained by the method of producing an olefin resin composition for a home electric appliance according to the present invention is suitable as a material of a home electric appliance, particularly as a plastic material used in the interior and exterior of a home electric appliance. Examples of the home electric appliance include televisions, video tape recorders, DVD recorders, Blu-ray players, audio systems, component stereo systems, refrigerators, microwave ovens, rice cookers, washing machines, dish washers, vacuum cleaners and air conditioners.

### EXAMPLES

The present invention will now be described in more detail by way of Production Examples A to C, Examples and Comparative Examples; however, the present invention is not restricted thereto by any means. Here, Production Examples show methods of polymerizing an ethylenically unsaturated monomer, and Examples and Comparative Examples show evaluations of the olefin resin compositions obtained by the polymerization.

### [Production Example A]

### (Preparation of Solid Catalyst Component)

After preparing a homogeneous solution by allowing 4.76 g (50 mmol) of anhydrous magnesium chloride, 25 ml of decane and 23.4 ml (150 mmol) of 2-ethylhexyl alcohol to react under heating at 130°C for 2 hours, 1.11 g (7.5 mmol) of phthalic anhydride was added to the thus obtained homogeneous solution and the resulting mixture was maintained with stirring at 130°C for 1 hour, thereby dissolving phthalic anhydride in the homogeneous solution. Then, the resulting homogeneous solution was cooled to room temperature and the entire amount thereof was charged dropwise to 200 ml (1.8 mol) of titanium tetrachloride, which had been kept at -20°C, over a period of 1 hour. Thereafter, the resultant was heated to 110°C over a period of 4 hours. Once the temperature reached 110°C, 2.68 mL (12.5 mmol) of diisobutyl phthalate was added and the resulting mixture was allowed to react for 2 hours with stirring while maintaining the temperature at 110°C. After the completion of the reaction, the resulting residue was recovered by hot filtration and re-suspended in 200 ml of titanium tetrachloride, and the suspension was allowed to react under heating at 110°C for 2 hours. Thereafter, the resulting residue was recovered again by hot filtration and thoroughly washed with 110°C decane and hexane until no free titanium compound was detected in the washings, thereby obtaining a solid titanium catalyst component. When a portion of this solid titanium catalyst component was sampled and dried and the catalyst composition was analyzed, it was found that the catalyst contained 3.1 % by weight of titanium, 56.0% by weight of chlorine, 17.0% by weight of magnesium and 20.9% by weight of isobutyl phthalate.

### (Preparation of Phenoxide)

In a flask whose atmosphere had been replaced with nitrogen, 10 ml of heptane, 54 mg of triethylaluminum and 161 mg of the phenolic antioxidant shown in Table 1 were mixed with stirring to mask the phenolic antioxidant, thereby preparing a stabilizer solution having a phenolic antioxidant concentration of 16 mg/ml.

### (Polymerization)

To an autoclave whose atmosphere had been replaced with nitrogen, 600 mL of heptane, 303 mg of triethylaluminum and the above-described phenoxide solution were added such that the stabilizer composition shown in Table 1 was attained. Then, 0.26 mmol of dicyclopentyldimethoxysilane and a heptane sully of the solid Ti catalyst component (13 µmol in terms of Ti) were sequentially added. The atmosphere inside the autoclave was replaced with propylene and pre-polymerization was performed under a propylene pressure of 1 kgf/cm²G at 50°C for 5 minutes. After purging propylene, 340 ml of hydrogen (23°C) was blown into the autoclave and the temperature was raised to 70°C to perform polymerization reaction under a propylene pressure of 6 kgf/cm²G at 70°C for 1 hour. Thereafter, the atmosphere in the system was replaced with nitrogen gas and the polymerization reaction was subsequently quenched by adding 5 ml of ethanol at 40°C. The solvent was removed under reduced pressure at 50°C and the resulting polymer was dried in vacuum at 40°C for 5 hours to obtain a polyolefin resin composition.

### [Production Example B]

A polyolefin resin composition was obtained by performing the polymerization in the same manner as in Production Example A, except that a phosphite solution was prepared by the below-described method and the phenoxide solution and this phosphite solution were added such that the stabilizer composition shown in Table 1 was attained.

### (Preparation of Phosphite Solution)

In a flask whose atmosphere had been replaced with nitrogen, 144 mg of a phosphorus-based antioxidant and 6 mL of heptane were added and mixed with stirring to prepare a phosphite solution having a phosphorus-based antioxidant concentration of 24 mg/mL.

### [Production Example C]

A polyolefin resin composition was obtained by performing the polymerization in the same manner as in Production Example A, except that the phenoxide solution was not added.

### (Processing)

To 100 parts by mass of each polyolefin resin composition obtained by the above-described method, the stabilizer composition shown in Table 1 and 0.05 parts by mass of calcium stearate were added and mixed. Then, the resulting mixture was granulated using an extruder (uniaxial extruder; extrusion temperature: 230°C, screw speed: 50 rpm) to obtain a pellet.

The physical properties of the thus obtained pellet were evaluated by the following methods.

### (Thermal Stability)

A process of loading the above-described pellet to a biaxial extruder (LABO-PLASTOMILL MICRO, manufactured by Toyo Seiki Seisaku-sho, Ltd.; extrusion temperature: 230°C, screw rotation speed: 50 rpm) and kneading the pellet was repeated 5 times and the weight-average molecular weight of the resultant was measured by gel permeation chromatography (apparatus: GPC2000 manufactured by Waters Corporation; columns: two Styragel HT6E columns and one Styragel HT2 column, which are manufactured by Waters Corporation; measuring temperature: 135°C; solvent: o-dichlorobenzene; concentration: 6 mg/10 g). The results thereof are shown in Table 1 below.

### (Coloration Resistance (Y.I.))

The pellets obtained in the above were each heat-pressed at 180°C to prepare a 2 mm-thick sheet. Using a spectrocolorimeter (SC-T; manufactured by Suga Test Instruments Co., Ltd.), the yellowness of the thus prepared sheet was measured. The results thereof are shown in Table 1 below.

### (Fogging Resistance)

For each of the pellets obtained in the above, the cloudiness of a glass plate subjected to a fogging test in accordance with ISO 6452 was visually observed. When the glass plate was observed with no cloudiness, the fogging resistance was evaluated as "○" (present), while when the glass plate was observed with cloudiness, the fogging resistance was evaluated as "×" (absent). The evaluation results are shown in Table 1 below.

**[Table 1]**

| | Stabilizer composition added at the time of polymerization | | Stabilizer composition added at the time of granulation | | Production Example | Measurement evaluation | | | |
|---|---|---|---|---|---|---|---|---|---|
| | Compound | Added amount [parts by mass] | Compound | Added amount [parts by mass] | | Weight-average molecular weight | | Coloration resistance | Fogging resistance |
| | | | | | | Before extrusion | After 5 extrusions | | |
| Example 1 | AO-1 | 0.01 | Ca-St | 0.05 | A | 4.48 × 10⁵ | 4.05 × 10⁵ | 2.4 | ○ |
| Example 2 | AO-1 P-1 | 0.005 0.015 | Ca-St | 0.05 | B | 4.46 × 10⁵ | 4.04 × 10⁵ | 1.7 | ○ |
| Comparative Example 1 | | | P-1 | 0.015 | C | 4.48 × 10⁵ | 3.13 × 10⁵ | 3.8 | ○ |
| | | | Ca-St | 0.05 | | | | | |
| Comparative Example 2 | | | AO-2 | 0.05 | C | 4.48 × 10⁵ | 3.58 × 10⁵ | 3.3 | × |
| | | | Ca-St | 0.05 | | | | | |
| Comparative Example 3 | | | AO-2 | 0.05 | C | 4.48 × 10⁵ | 4.00 × 10⁵ | 2.3 | × |
| | | | P-1 | 0.05 | | | | | |
| | | | Ca-St | 0.05 | | | | | |
| Comparative Example 4 | | | AO-3 | 0.05 | C | 4.47 × 10⁵ | 3.73 × 10⁵ | 3.6 | × |
| | | | Ca-St | 0.05 | | | | | |
| Comparative Example 5 | | | AO-3 | 0.05 | C | 4.44 × 10⁵ | 4.06 × 10⁵ | 2.5 | × |
| | | | P-1 | 0.05 | | | | | |
| | | | Ca-St | 0.05 | | | | | |
| Comparative Example 6 | | | AO-1 | 0.01 | C | 4.45 × 10⁵ | 3.12 × 10⁵ | 4.6 | ○ |
| | | | Ca-St | 0.05 | | | | | |
| Comparative Example 7 | | | AO-1 | 0.005 | C | 4.47 × 10⁵ | 3.08 × 10⁵ | 5.0 | ○ |
| | | | P-1 | 0.015 | | | | | |
| | | | Ca-St | 0.05 | | | | | |
| Comparative Example 8 | AO-2 | 0.01 | Ca-St | 0.05 | A | 4.44 × 10⁵ | 3.21 × 10⁵ | 2.8 | × |
| Comparative Example 9 | AO-3 | 0.01 | Ca-St | 0.05 | A | 4.45 × 10⁵ | 3.54 × 10⁵ | 3.1 | × |

| | | | | | | | | | |
|---|---|---|---|---|---|---|---|---|---|
| 1) AO-1: Compound No. 4 2) AO-2: octadecyl-3-(3,5-di-t-butyl-4-hydroxyphenyl)propionate 3) AO-3: tetrakis[methylenebis-3-(3,5-di-t-butyl-4'-hydroxyphenyl)propionate]methane 4) P-1: tris(2,4-di-t-butylphenyl)phosphite 5) Ca-St: calcium stearate | | | | | | | | | |

None of those polyolefin resin compositions that were obtained in Comparative Examples 1 to 9 by a production method different from the production method of the present invention had satisfactory thermal stability, coloration resistance or fogging resistance. On the other hand, as clearly seen from the results of Examples 1 and 2, it was confirmed that the polyolefin resin compositions obtained by the production method of the present invention have excellent thermal stability and show excellent color tone and fogging resistance. Furthermore, in Examples 1 and 2, despite the respective total amounts of the antioxidant(s) were equivalent to those of Comparative Examples 6 and 7, the obtained polymers had high thermal stability and showed excellent coloration resistance.

## Claims

1. A method of producing an olefin resin composition for an automotive interior material by polymerization of an olefin monomer, said method being **characterized by** comprising the step of adding, before or during said polymerization of said olefin monomer, 0.001 to 0.5 parts by mass of a phenolic antioxidant, which is represented by the following Formula (1) and masked with an organoaluminum compound, with respect to 100 parts by mass of an olefin resin obtained by said polymerization: 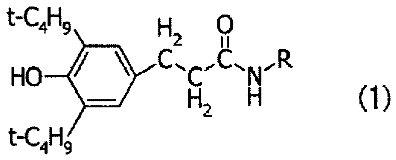 (wherein, R represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

2. A method of producing an olefin resin composition for a home electric appliance material by polymerization of an olefin monomer, said method being **characterized by** comprising the step of adding, before or during said polymerization of said olefin monomer, 0.001 to 0.5 parts by mass of a phenolic antioxidant, which is represented by the following Formula (1) and masked with an organoaluminum compound, with respect to 100 parts by mass of an olefin resin obtained by said polymerization: 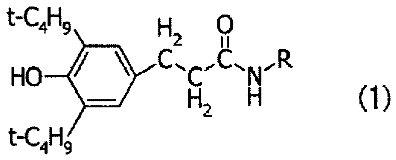 (wherein, R represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

3. The method of producing an olefin resin composition for an automotive interior material according to claim 1, wherein said organoaluminum compound is a trialkylaluminum.

4. The method of producing an olefin resin composition for a home electric appliance material according to claim 2, wherein said organoaluminum compound is a trialkylaluminum.

5. The method of producing an olefin resin composition for an automotive interior material according to claim 1, comprising further adding a phosphorus-based antioxidant before or during polymerization of a monomer comprising an ethylenically unsaturated bond.

6. The method of producing an olefin resin composition for a home electric appliance material according to claim 2, comprising further adding a phosphorus-based antioxidant before or during polymerization of a monomer comprising an ethylenically unsaturated bond.

7. An automotive interior material, **characterized by** being obtained by molding an olefin resin composition for an automotive interior material produced by the method of producing an olefin resin composition for an automotive interior material according to claim 1.

8. An exterior material of a home electric appliance, **characterized by** being obtained by molding an olefin resin composition for a home electric appliance material produced by the method of producing an olefin resin composition for a home electric appliance material according to claim 2.
